# EUROPEAN PATENT APPLICATION

(11) **EP 0 668 552 A1**
(43) Date of publication of application: **23.08.1995**
(21) Application number: 95300728.3
(22) Date of filing: 06.02.1995
(51) Int. Cl.: G05B 9/03

(54) **Control apparatus**

(30) Priority: 18.02.1994 GB 9403123; 18.03.1994 GB 9405356
(71) Applicant: LUCAS INDUSTRIES PUBLIC LIMITED COMPANY, Solihull, West Midlands B91 3TX (GB)
(72) Inventor: Simmons, John Robert, Solihull, West Midlands, B27 7AP (GB)
(74) Representative: Robinson, John Stuart

(57) **Abstract**

An apparatus for controlling a system comprises a main controller (2) and a back-up controller (20). The main controller (2) comprises a programmable data processor and may itself contain duplicated lanes to enhance fault tolerance. The back-up controller (2) is a non-software digital controller, such as a state machine, such that all of the states of the back-up controller can be defined and hence the back-up controller is fully testable.

## Description

The present invention relates to a control apparatus, such an apparatus is suitable for use as a system controller or a process controller.

Such a controller may be used to control various types of system. In one example, such a controller may be used to control a gas turbine engine, for instance for aerospace applications. In another example, such a controller may be used to control an automotive system, for instance a vehicle engine, an antilock brake system, or a vehicle power steering system.

It is known to control the operation of aero-engines with a full authority digital controller. Such controllers are required to be very reliable. To achieve high reliability, it is known to provide a high degree of monitoring and redundancy within the controller.

US 4,504,905 discloses a controller having two control channels. Each channel comprises a programmable data processor. Either channel may control the engine. In use, one channel is arranged to control the engine and the other channel acts as a stand-by for use in the event of failure of the one channel.

It is known to implement the channels using dissimilar hardware and software, as disclosed in US 4,590,549, so that there should be no common failure modes.

However it is difficult to demonstrate that a software controlled controller is fully reliable. It is particularly important to be able to demonstrate the reliability of a controller if such a controller is to be used as a back up in the event of failure of a primary controller.

According to a the present invention, there is provided a control apparatus, comprising:
a main controller comprising at least one programmable data processor; and
a back up controller comprising a non-software digital controller, the back up controller being arranged to take control when the main controller fails.

It is thus possible to provide a reliable and testable controller. This is especially advantageous if the controller is used as a back-up controller in a safety critical application. Such applications include control of dangerous machinery or processes, vehicle systems control, and especially aerospace systems control.

Preferably the non-software digital controller is a state machine.

A state machine is a digital device which provides predetermined outputs in response to predetermined inputs.

Preferably the state machine is arranged to perform operations in a predefined sequence at predefined intervals or instants.

The controller may be arranged to contol a system such as an engine. Advantageously engine fuelling schedules and/or other engine parameters are stored in a memory so that the non-software digital controller may be adapted to an application without having to redefine the control strategy implemented within the controller. Thus when the controller is a state machine, it is not necessary to redefine the states of the state machine. It is thus possible to provide a digital controller which performs in a manner similar to a full authority digital engine control (FADEC), but which does not rely on software.

The state machine does not perform calculations in the manner of a programmable data processor. It provides the correct data at the correct time to hardware-implemented functional blocks or look-up tables. It is thus possible to move from one state to another in a defined sequence which may be dependent on one or more input signals. It is possible to implement fully predictable functional blocks, such as three term PID controllers, with a state machine. Advantageously the controllers may be organised to implement other control strategies.

System constants used by the functional blocks and the look-up tables may be stored in programmable memory. Advantageously the programmable memory is a reprogrammable memory. Thus, gains in control loops and compensation factors may be altered without system re-design, although new control loops would not be added.

Preferably the main controller comprises first and second control lanes. Preferably the first control lane comprises a first programmable data processor arranged to control the engine. Preferably the second control lane comprises a second programmable data processor arranged to control the engine. The first and second lanes are arranged such that, in use, one of the lanes is controlling the or each engine and the other lane is in standby.

The back up controller may be arranged to take over from the main controller at the request of the pilot when the main controller is unable to control the or each engine correctly, for instance, when faults exist in both the first and second lanes and are such that the lanes are unable to function individually or in combination.

The engine controller may be arranged to control at least one engine of an aircraft. The or each engine may be a gas turbine engine. The first and second lanes of the main controller may be arranged to control a main fuel metering valve for controlling the rate of flow of fuel to a combustion chamber of the engine. The back up controller may be arranged to control a back up metering valve. The back up controller may further be arranged to control a bypass valve for allowing fuel flow control to be performed by the back up metering valve irrespective of the operating state of the main metering valve. The engine controller may also be used to control variable geometry actuators of the engine compressor.

A controller implemented as a state machine has a predefined number of states and its response to each one of its states can be fully tested. Furthermore the designers can demonstrate that the controller response to any set of input conditions is fully predictable.

The present invention will further be described, by way of example, with reference to the accompanying drawings, in which:
Figure 1 is a block diagram of an engine controller having a back-up state machine controller constituting an embodiment of the present invention;
Figure 2 is a block diagram showing the state machine controller of Figure 1 in more detail; and
Figures 3 and 4 show the relationship between functional elements of the state machine controller of Figure 1

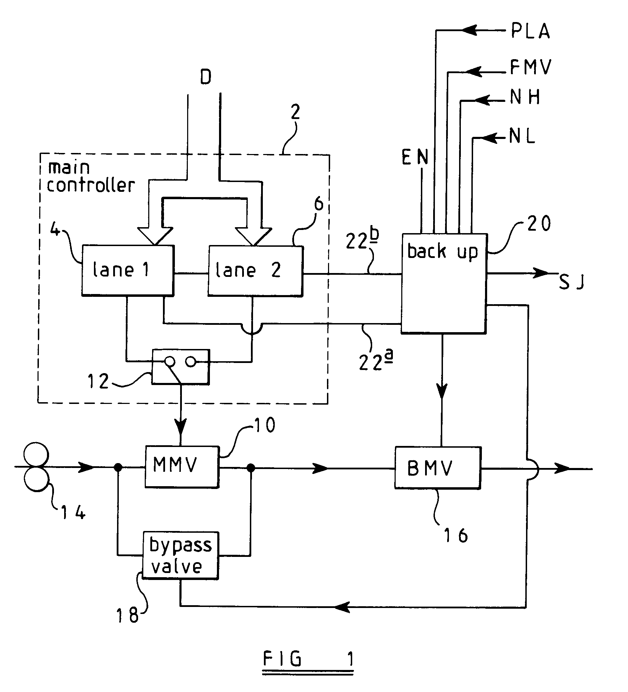

The engine control system shown in Figure 1 comprises a main controller 2 having first and second control lanes 4 and 6, respectively. Each of the first and second lanes 4 and 6 receives data, such as pilot lever position, engine temperature, fuel metering valve position and engine speed, from a data bus D. A control input of a fuel metering valve 10 is selectively connectable to the output of the first or second control lane so as to be controlled by either of the lanes at a time. The connection is schematically represented by a switch 12 in Figure 1.

The fuel metering valve 10 receives high pressure fuel from a pump 14 and supplies fuel to an engine (not shown) via a back up metering valve 16. A bypass valve 18 is connected in parallel with the fuel metering valve 10.

A back up controller 20, implemented as a state machine, receives input data representing pilot lever angle position PLA, back up fuel metering valve position FMV, and, in the case of a two spool engine, the speed NH of a high speed spool and the speed NL of a low speed spool.

The back up controller 20 has serial data links 22a and 22b with the first and second lanes 4 and 6, respectively, of the main controller 2. The back up controller 20 has a back up fuel metering valve output connected to the back up metering valve 16 and a bypass valve output connected to the bypass valve 18. The back up controller can also control engine start up valves, should it be necessary to relight the engine.

In use, one lane, for example the first lane 4, of the main controller 2 controls the operation of the engine (not shown) while the second lane 6 operates in a standby mode ready to take over from the first lane if required. If a fault occurs in the first lane 2, the second lane is brought into control of the engine. If a further fault occurs in the main controller 2 such that the second lane is unable to control the engine, control is passed to the back up controller 20.

The back up fuel metering valve 16 is set fully open and the bypass valve 18 is closed when the main controller 2 is in control of the engine. If control is passed to the back up controller 20, the controller 20 opens the bypass valve 18 so as to ensure that the engine is unresponsive to the position of the fuel metering valve 10. Control is then effected by the position of the back up fuel metering valve 16.

The back up controller can receive data from the first and second lanes of the main controller 2 via the serial links 22a and 22b allowing cross correlation of sensor and status information. The back up controller receives pressure data from the first and second lanes, these data being compared and range checked. If the comparisons or range checks indicate that the data are unsatisfactory, default parameters corresponding to a worst case condition are substituted for use in control value calculations.

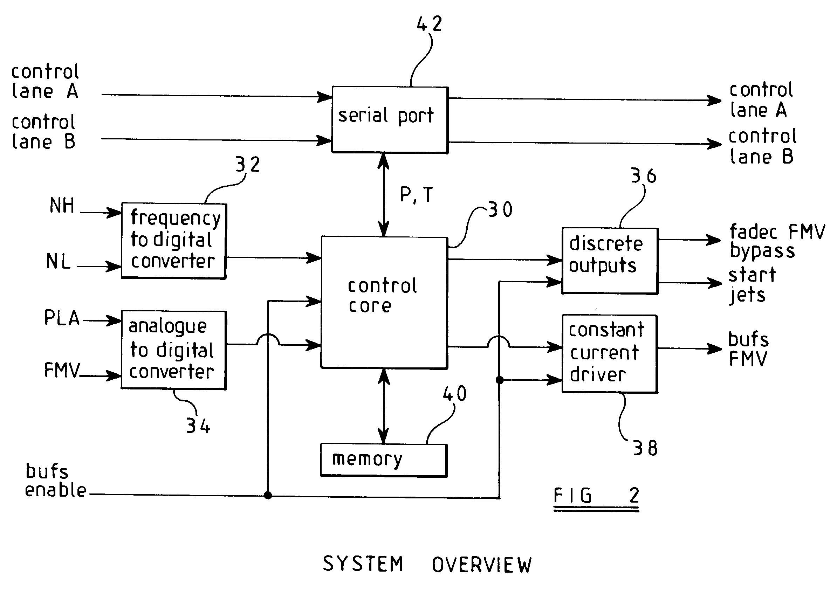

The back up controller is shown in further detail in Figure 2. Although the controller will be described only in the context of a fuel control system, its functions could be extended to implement a full engine control system, for example, including compressor variable geometry control. A control core 30 receives engine speed data in respect of the high speed spool speed NH and the low speed spool speed NL from a frequency to digital converter 32. An analogue to digital converter 34 supplies data representing the pilot lever angle position PLA and the position FMV of the back up fuel metering valve 16. Outputs of the control core are sent to an output driver 36 for controlling the bypass valve 18 and engine start jets (not shown). A back up fuel metering valve output is supplied to a constant current driver 38 for providing a control signal for the back up fuel metering valve 16. The output driver 36 and the current driver 38 also receive an enable signal BUFS ENABLE which holds the drivers 36 and 38 in a standby mode until control is passed to the back up controller 20.

A reprogrammable memory 40 holds system constants and look-up tables that are used by the state machine. A serial port 42 receives data from the first and second lanes 4 and 6 of the first controller 2.

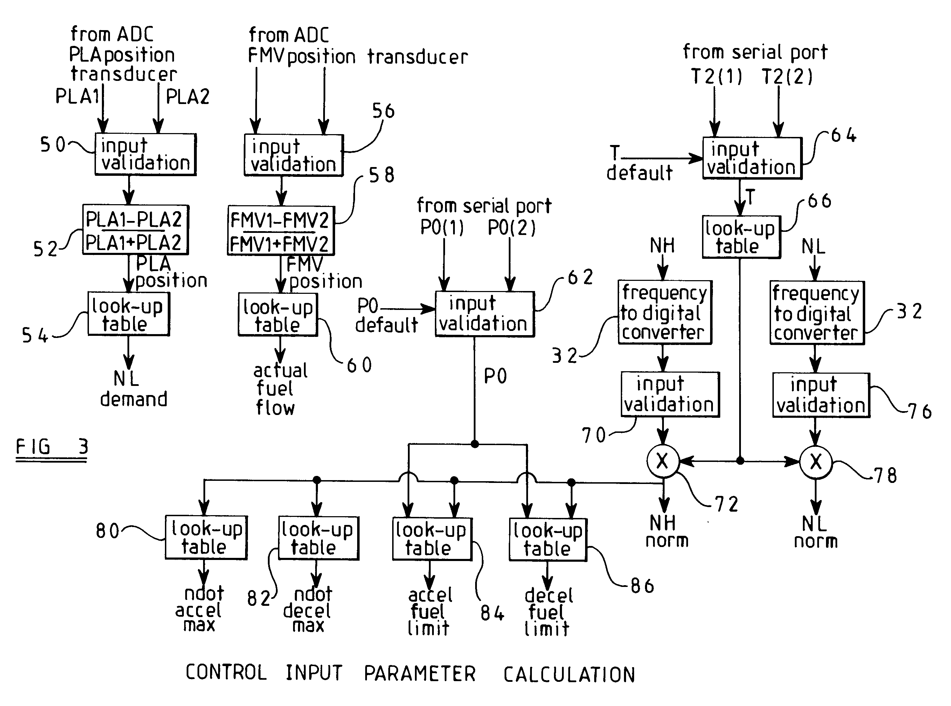

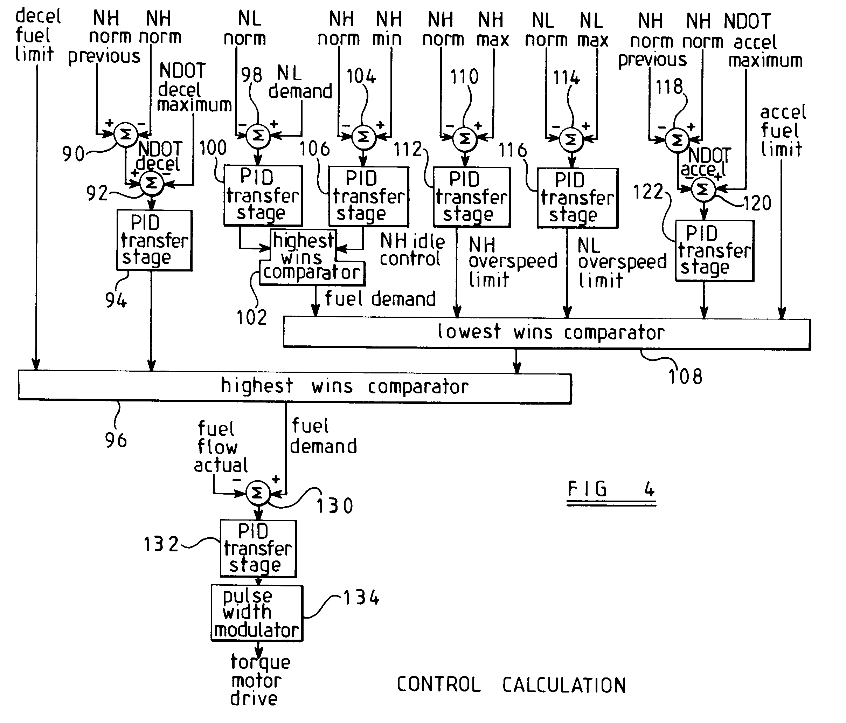

A general overview of operation of an embodiment of a state machine controller will be described with reference to Figures 3 and 4 of the drawings.

A resolver (not shown) provides first and second signals PLA1 and PLA2 representing pilot lever position which signals are converted into digital format by the analogue to digital converter 34. A first input validator 50 checks that both signals are within an acceptable range of values and then a calculation block 52 forms the value of (PLA1 - PLA2)/(PLA1 + PLA2) which is used to address a look-up table 54 to obtain a demanded value NL DEMAND for the low speed spool.

Similarly a resolver (not shown) provides first and second signals FMV1 and FMV2 representing back up fuel metering valve position which signals are converted into digital format by the analogue to digital converter 34. A second input validator 56 checks that both signals are within an acceptable range of values and then a calculation block 58 forms the value of (FMV1 - FMV2)/(FMV1 + FMV2) which is used to address a look-up table 60 to obtain a value ACTUAL FUEL FLOW representing fuel flow to the engine.

A third input validator 62 receives pressure measurements P0(1) and P0(2) from the main and second lanes 4 and 6, respectively, of the main controller 2 via the serial links 22 and the serial port 42. The validator 62 compares the values P0(1) and P0(2) to form a measurement of the ambient pressure P0. If P0(1) and P0(2) differ significantly a default value P0 DEFAULT is used.

First and second temperature signals T2(1) and T2(2) supplied from the first and second lanes 4 and 6, respectively, of the main controller 2 via the serial links 22 and the serial port 42 are supplied to a fourth input validator 64. The validator 64 compares the values T2(1) and T2(2) to form a measurement of the compressor delivery temperature T. If T2(1) and T2(2) differ significantly, a default value T DEFAULT is used. The measurement of temperature T is used to address a look up table 66.

An output of a speed transducer (not shown) measuring the speed NH of the high speed spool is converted into digital format by the frequency to digital converter 32 and then supplied to a fifth input validator 70 to check that the signal is within an acceptable range of values. The speed NH is multiplied by the output of the look-up table 66 in a multiplier 72 to form a temperature normalised value of the high speed spool speed NH NORM. Similarly an output of a speed transducer (not shown) measuring the speed NL of the low speed spool is converted into digital format by the frequency to digital converter 32 and then supplied to a sixth input validator 76 to check that the signal is within an acceptable range of values. The speed NL is multiplied by the output of the look-up table 66 in a multiplier 78 to form a temperature normalised value of the low speed spool speed NL NORM.

NH NORM is used to address look-up tables 80 and 82 to provide values NDOT ACCEL MAX and NDOT DECEL MAX representing the maximum allowable rate of change of speed during acceleration and deceleration, respectively, of the high speed spool.

NH NORM and P0 are used to address look-up tables 84 and 86 to provide values ACCEL FUEL LIMIT and DECEL FUEL LIMIT representing the maximum allowable rate of fuel delivery and the minimum allowable rate of fuel delivery, respectively (both are a function of speed).

A previous value NH NORM PREVIOUS of NH NORM held by a register (not shown) is supplied to a summing input of a first summer 90. A subtracting input of the summer 90 receives the value NH NORM. An output of the summer 90 is connected to a summing input of a second summer 92. A subtracting input of the summer 92 receives the value NDOT DECEL MAX. An output of the summer 92 is connected to an input of a first proportional integral differential (PID) controller 94 implemented as a state machine. An output of the controller 94 is supplied to an input of a highest wins comparator 96.

The values NL NORM and NL DEMAND are supplied to the subtracting and summing inputs, respectively, of a third summer 98. An output of the summer 98 is connected to an input of a second PID controller 100. An output of the controller 100 is connected to a first input of a highest wins comparator 102. The values NH NORM and NH MIN (a system constant representing a minimum allowable high speed spool speed) are supplied to the subtracting and summing inputs, respectively, of a fourth summer 104. An output of the summer 104 is connected to an input of a third PID controller 106. An output of the controller 106 is connected to a second input of the highest wins comparator 102. An output of the comparator 102 representing a fuel demand is supplied to a first input of a lowest wins comparator 108.

The values NH NORM and NH MAX (a system constant representing a maximum allowable high speed spool speed) are supplied to the subtracting and summing inputs, respectively, of a fifth summer 110, an output of which is connected to an input of a fourth PID controller 112. An output of the controller 112, representing a high speed spool over speed limit NH OVERSPEED LIMIT is connected to a second input of the lowest wins comparator 108.

The values NL NORM and NL MAX (a system constant representing a maximum allowable low speed spool speed) are supplied to the subtracting and summing inputs, respectively, of a sixth summer 114, an output of which is connected to an input of a fifth PID controller 116. An output of the controller 116, representing a low speed spool over speed limit NL OVERSPEED LIMIT is connected to a third input of the lowest wins comparator 108.

The values NH NORM PREVIOUS and NH NORM are supplied to the subtracting and summing inputs, respectively, of a seventh summer 118. An output of the summer 118 is connected to a subtracting input of an eighth summer 120. The value NDOT ACCEL MAX is supplied to a summing input of the summer 120. An output of the summer 120 is connected to an input of a sixth PID controller 122. An output of the controller 122 is connected to a fourth input of the lowest wins comparator 108.

The value ACCEL FUEL LIMIT is supplied to a fifth input of the lowest wins comparator 108. An output of the comparator 108 is connected to an input of the highest wins comparator 96. The highest wins comparator 96 also receives the value DECEL FUEL LIMIT. An output of the comparator 96 representing a fuel demand is supplied to a summing input of a ninth summer 130. The output of the look up table 60, representing actual fuel flow, is supplied to the subtracting input of the summer 130. An output of the summer 130 is supplied to an input of a seventh PID controller 132, whose output is connected to a pulse width modulator 134 which provides the signal to control the back up metering valve 16.

The PID controllers may be implemented within the core 30 of the state machine. The use of input validators to check that input signals fall within a valid range and to substitute default values when necessary ensures that the look up tables are always addressed by a valid address. Furthermore, since the outputs of the look up tables are fully defined, the range of inputs to the PID controllers are fully defined and the response of each controller is defined for the range of its input signal. Consequently every possible state of the state machine can be defined and tested, thereby ensuring that the state machine controller is fully testable and can be demonstrated to be fully testable.

## Claims

1. A control apparatus, the apparatus comprising a main controller (2) comprising at least one programmable data processor (4, 6) and a back-up controller (20) characterised in that the back-up controller (20) comprises a non-software digital controller arranged to take control when the main controller (2) fails.

2. A control apparatus as claimed in Claim 1, characterised in that the non-software digital controller (20) comprises at least one look-up table (54, 60, 80-86) and/or at least one functional block (94, 100, 106, 111, 116, 122, 86, 108).

3. A control apparatus as claimed in Claim 2, characterised in that at least one of the functional blocks is a three term PID controller (94, 100, 106, 112, 116, 122).

4. A control apparatus as claimed in Claim 2 or Claim 3, characterised in that at least one of the functional blocks is a comparator (96, 108).

5. A control apparatus as claimed in any one of Claims 2 to 4, characterised by further comprising a programmable memory for storing system contents used by the functional blocks and/or look-up tables.

6. A control apparatus as claimed in any one of the preceding claims, characterised in that the control apparatus is arranged to control at least one engine and engine fuelling schedules and/or other engine parameters are stored within a memory such that the non-software digital controller can be adapted to an application without the need to redefine the control strategy.

7. A control apparatus as claimed in Claim 6, characterised in that the main controller (2) comprises first and second control lanes, each lane comprising at least one programmable data processor and each lane arranged to control the at least one engine, the lanes further arranged such that, in use, one lane controls the at least one engine and the other lane is in standby.

8. A control apparatus as claimed in Claim 7, characterised in that the back-up controller is arranged to take over from the main controller (2) at the request of a user or when the main controller is unable to control the at least one engine correctly.

9. A control apparatus as claimed in any one of Claims 6 to 8, characterised by a main fuel metering valve arranged to be controlled by the main controller, and a back-up metering valve arranged to be controlled by the back-up controller.

10. A control apparatus as claimed in any one of the preceding claims, characterised in that the non-software digital controller comprises a state machine.

11. A control apparatus as claimed in Claim 5, characterised in that the memory is reprogrammable.
